# EUROPEAN PATENT APPLICATION

(11) **EP 2 587 008 A1**
(43) Date of publication of application: **01.05.2013**
(21) Application number: 11777084.2
(22) Date of filing: 05.05.2011
(51) Int. Cl.: F01L 9/04, H02K 41/02

(54) **DRIVING DEVICE FOR ELECTROMAGNETIC VALVE**

(30) Priority: 01.11.2010 CN 201010526680; 05.05.2010 CN 201010162840
(71) Applicant: Tianjin Changing Power Technology Co., Ltd., Tianjin 300457 (CN)
(72) Inventor: TANG, Minglong, Tianjin 300457 (CN); LI, Xiaonian, Tianjin 300457 (CN); ZHANG, Jie, Tianjin 300457 (CN); LIU, Bin, Tianjin 300457 (CN)
(74) Representative: Hryszkiewicz, Danuta
(86) International application number: PCT/CN2011/000786
(87) International publication number: WO 2011/137663

(57) **Abstract**

A driving device for an electromagnetic valve comprises a driving housing (1). An upper electromagnet assembly (2) and a lower electromagnet assembly (3),which are arranged up and down, are provided in the driving housing (1). The lower end surface of the upper electromagnet assembly (2) is an upper pick-up surface (2a), and the upper end surface of the lower electromagnet assembly (3) is a lower pick-up surface (3a). An armature (4), which can move up and down, is arranged between the upper and lower pick-up surfaces (2a, 3a). Each of the electromagnet assemblies (2, 3) includes an inner core (5), a coil assembly (6) and an outer core (7), which are sequentially in muff coupling from inside to outside. The coil assembly (6) includes a coil winding (6a) and a magnetic conductor (6b), which are wrapped on the exterior of the inner core (5) alternatively. A radial permanent magnet (8) is arranged between each of the inner cores (5) and each of the outer cores (7). A valve spring (9) is arranged inside each of the inner cores (5) respectively. A valve rod (10) is arranged in and through the valve spring (9), and is fixedly connected with the armature (4). The armature (4) is connected with at least one of the radial permanent magnets (8) to form a combined driving rotor, or the armature (4) is independent of the radial permanent magnets (8). The valve rod (10) can move along with the up-and-down movement of the armature (4).

## Description

The invention relates to an actuation system for an electromagnetic valve, and more particularly to a radial permanent linear motor type actuation system for an electromagnetic valve.

Currently known valve actuation systems for motors are mainly cam actuation systems, the opening and closing of the valve depends on the shape of the cam and thus the lift range and phase angle of the valve is difficult to adjust with the working conditions. For example, when a gasoline motor runs with a low load, the jaw opening of its air damper is very small so as to reduce the air input, and the damper loss is great. Subsequently, valve actuation machines with multiple cams emerge, which, however, can only allow minor adjustment. Therefore, electromagnetic valve actuation systems come into being, which can adjust the phase angle of valves and the air input by adjusting the phase angle of the inlet electromagnetic valve systems, thus the air damper can be removed and the damper loss can be eliminated. However, the electromagnet has two shortcomings: (1) large current is required for it to produce the same attraction force when the air gap is large; (2) power consumption is needed when the valve maintains an open state or closed state.

For conventional electromagnetic valve actuation systems with a single-spring structure, the single spring leaves the air valve in a normally closed state. High current is required when the valve tries to open through overcoming the spring force by the electromagnetic attraction force, thus the electromagnetic valve actuation demands a relatively high power, up to 5 KW or so, and is of no practical value.

In recent years, an actuation system for an electromagnetic valve with a dual-spring structure has been developed. Two compressed springs are fitted one against the other and connected with a valve rod or armature, and when they are in the rest position, the valve is half open. The valve, armature, and the springs form a vibration system and when the valve and the armature deviate from the rest position, the system will vibrate to realize the opening and closing of the valve. The actuation system for an electromagnetic valve with the dual-spring structure includes two electromagnets, the attraction force of which supplements the energy loss of the system and allows the valve to keep closed or picked-up, thus its power is significantly reduced, yet the two shortcomings above still exist. Besides, when the electromagnets are being picked up, the attraction force is high and problems of valve hitting valve seat or armature hitting electromagnet may be caused, so the supplemented energy is required to be appropriate and preferably closed-loop control shall be conducted on the current to control the seating speed; and in order to increase the efficiency, it is better to supplement energy when the armature is nearer to the electromagnet, yet the time for supplementing is short and energy supplementing is difficult to control, therefore, it is difficult to balance the two aspects. In addition, valve retaining also requires relatively high energy, and generally, the power of a single valve of this system can reach above 100 W, accordingly, a conventional 16-valve motor will demand power of up to 1-2 kW, which is still very high.

It is one objective of the invention to provide an actuation system for an electromagnetic valve.

The objective is achieved according to the following technical scheme.

An actuation system for an electromagnetic valve, comprises: an actuation housing; an upper electromagnet assembly and a lower electromagnet assembly, both being installed inside the actuation housing and the upper electromagnet assembly being arranged above the lower electromagnet assembly, the upper electromagnet assembly comprising a lower end surface which operates as an upper pickup surface, and the lower electromagnet assembly comprising an upper end surface which operates as a lower pickup surface; an armature, the armature being disposed between the upper pickup surface and the lower pickup surface and capable of moving up and down; a radial permanent magnet; a valve spring; and a valve rod . Each electromagnet assembly comprises an inner magnet core, a coil kit, and an outer magnet core, which are sleeved with each other from inside to outside.The coil kit comprises a coil winding and a magnetizer, and the coil winding and the magnetizer wind the inner magnet core by turns. The radial permanent magnet is disposed between the inner magnet core and the outer magnet core. The valve spring is disposed at an inner side of the inner magnet core. The valve rod passes through a center formed by the valve spring and is fixedly connected with the armature. The armature is interconnected with at least one radial permanent magnet to form an actuation compound rotor, or, the armature and the radial permanent magnet are independent with each other. The valve rod is capable of moving with the move of the armature up and down.

Advantages of the invention are summarized as follows:

1. In the existing actuation systems for an electromagnetic valve including dual electromagnet and dual-spring structure, the attraction force comes from the electromagnets, and under the same attraction force, the current needs to increase significantly when the pickup distance is increasing; while this invention can achieve the cooperation of the linear motor and the electromagnet, thus reducing the working current and the energy consumption.

2. In the existing permanent magnet pickup type retaining mechanisms, the permanent magnet is installed in series in the electromagnetic circuit and the magnetic strength of the entire magnetic circuit varies significantly, thus the magnetic loss is high; while this invention can form a parallel magnetic circuit type permanent magnet pickup retaining mechanism, thus removing the retaining current, reducing the demagnetizing effect of the permanent magnet, lowering the magnetic strength variation of the magnetic circuit, and saving the energy consumption.

The invention is described hereinbelow with reference to the accompanying drawings, in which:

FIG. 1 is a stereogram of an actuation system for an electromagnetic valve in accordance with one embodiment of the invention;

FIG. 2 is a cross-sectional view taken from line A-A of FIG. 1;

FIG. 3 is a stereogram of a coil kit of an actuation system for an electromagnetic valve in accordance with one embodiment of the invention;

FIG. 4 is a stereogram of a coil kit comprising a coil cover and a coil former in accordance with one embodiment of the invention;

FIG. 5 is a stereogram of a separate coil cover of a coil kit in accordance with one embodiment of the invention;

FIG. 6 is a front view of a coil kit of an actuation system for an electromagnetic valve in accordance with one embodiment of the invention;

FIG. 6A is an enlarged view of part A in FIG. 6;

FIG. 7 is a stereogram of a coil kit of an actuation system for an electromagnetic valve in accordance with another embodiment of the invention;

FIG. 7A is an enlarged view of part B in FIG. 6;

FIG. 8 is a stereogram of a combined-type compound rotor of an actuation system for an electromagnetic valve in accordance with one embodiment of the invention;

FIG. 9 is a stereogram of an armature bracket of a combined-type compound rotor of in accordance with one embodiment of the invention;

FIG. 10 is a stereogram of a magnetic group of a combined-type compound rotor of in accordance with one embodiment of the invention;

FIG. 11 is a cross-sectional view of an integral-type compound rotor of an actuation system for an electromagnetic valve in accordance with one embodiment of the invention;

FIG. 12 is a cross-sectional view of an integral-type compound rotor of an actuation system for an electromagnetic valve in accordance with another embodiment of the invention;

FIG. 13 is a stereogram of an integral-type compound rotor of an actuation system for an electromagnetic valve in accordance with still another embodiment of the invention;

FIG. 14 is a stereogram of an inner magnet core of an actuation system for an electromagnetic valve in accordance with one embodiment of the invention;

FIG. 15 is a stereogram of an inner magnet core frame of an actuation system for an electromagnetic valve in accordance with still another embodiment of the invention;

FIG. 16 is a stereogram of an L-shaped overlapping fan of an inner magnet core in accordance with still another embodiment of the invention;

FIG. 17 is a stereogram of an overlapping fan of an outer magnet core in accordance with still another embodiment of the invention;

FIG. 18 is a stereogram of an outer magnet core frame of an outer magnet core in accordance with still another embodiment of the invention;

FIG. 19 is a cross-sectional view of an integral magnet core in accordance with one embodiment of the invention;

FIG. 20 is a magnetic conductivity distribution diagram of an integral magnet core in accordance with one embodiment of the invention;

FIG. 21 is a partial flux distribution diagram of an upper electromagnet assembly of an actuation system for an electromagnetic valve when an armature moves away from a pickup surface in accordance with one embodiment of the invention;

FIG. 22 is a partial flux distribution diagram of an actuation system for an electromagnetic valve when an armature attracts a pickup surface in accordance with one embodiment of the invention;

FIG. 23 is a partial flux distribution diagram of an actuation system for an electromagnetic valve when an armature attracts a pickup surface in accordance with another embodiment of the invention;

FIG. 24 is a partial flux distribution diagram of an actuation system for an electromagnetic valve when an armature attracts a pickup surface in accordance with still another embodiment of the invention;

FIG. 25 is a cross-sectional view of an integral magnet core actuation system of a dual linear motor for an electromagnetic valve in accordance with another embodiment of the invention;

FIG. 26 is a cross-sectional view of an integral magnet core actuation system of a single linear motor for an electromagnetic valve in accordance with another embodiment of the invention;

FIG. 27 is a cross-sectional view of an integral magnet core actuation system of a non-linear motor for an electromagnetic valve in accordance with another embodiment of the invention;

FIG. 28 is a structure diagram of a circuit device of an actuation system for an electromagnetic valve in accordance with one embodiment of the invention;

FIG. 29 is a cross-sectional view of a speed sensor of an actuation system for an electromagnetic valve in accordance with one embodiment of the invention;

FIG. 30 is a cross-sectional view of a speed sensor of an actuation system for an electromagnetic valve in accordance with another embodiment of the invention;

FIG. 31 is a cross-sectional view of a speed sensor of an actuation system for an electromagnetic valve in accordance with still another embodiment of the invention;

FIG. 32 is a stereogram of a dual-valve electromagnetic actuation system in accordance with one embodiment of the invention; and

FIG. 33 is a cross-sectional view of a dual-valve electromagnetic actuation system in accordance with one embodiment of the invention.

To further illustrate the invention, experiments detailing an actuation system for an electromagnetic valve are described. It should be noted that the following examples are intended to describe and not limited to the invention.

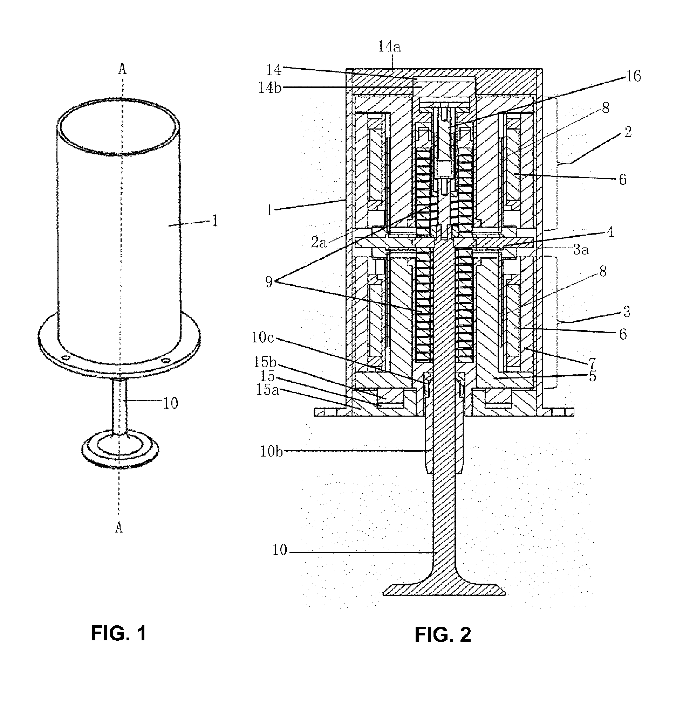

As shown in FIGS. 1-3, an actuation system for an electromagnetic valve comprises: an actuation housing 1; an upper electromagnet assembly 2 and a lower electromagnet assembly 3, both being installed inside the actuation housing 1 and the upper electromagnet assembly 2 being arranged above the lower electromagnet assembly 3, the upper electromagnet assembly 2 comprising a lower end surface which operates as an upper pickup surface 2a, and the lower electromagnet assembly 3 comprising an upper end surface which operates as a lower pickup surface 3a; an armature 4, the armature 4 being disposed between the upper pickup surface 2a and the lower pickup surface 3a and capable of moving up and down; a radial permanent magnet 8; a valve spring 9; and a valve rod 10. Each electromagnet assembly 2, 3 comprises an inner magnet core 5, a coil kit 6, and an outer magnet core 7, which are sleeved with each other from inside to outside. The coil kit 6 comprises a coil winding 6a and a magnetizer 6b, and the coil winding 6a and the magnetizer 6b wind the inner magnet core 5 by turns. The radial permanent magnet 8 is disposed between the inner magnet core 5 and the outer magnet core 7. The valve spring 9 is disposed at an inner side of the inner magnet core 5. The valve rod 10 passes through a center formed by the valve spring 9 and is fixedly connected with the armature 4. The armature 4 is interconnected with at least one radial permanent magnet 8 to form an actuation compound rotor, or, the armature 4 and the radial permanent magnet 8 are independent with each other; and the valve rod 10 is capable of moving with the move of the armature 4 up and down. The actuation housing 1 can be fixed on a cylinder head of a motor or integrated with the cylinder head.

The magnetic circuit and working process of this invention is as follows:

By controlling the direction of the exciting current passing through the coil windings 6a of the upper and lower electromagnet assemblies 2 and 3 separately, the picking-up and releasing of the pickup surfaces 2a and 3a of the armature 4 can be controlled, and thus the up-and-down movement of the armature 4 can be controlled, i.e. the up-and-down movement of the valve rod 10 can be controlled, thereby achieving the opening and closing of the valve.

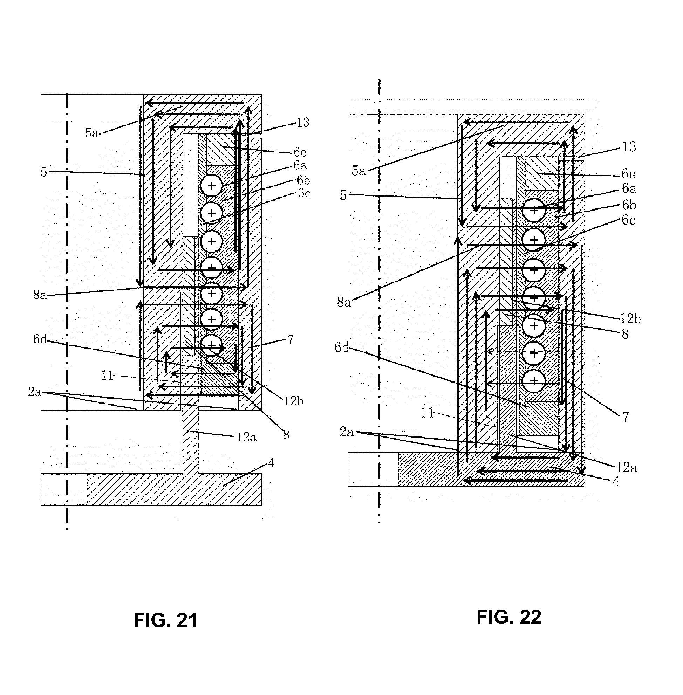

Radial magnetic flux 8a emitted by the radial permanent magnet 8 (the arrow direction as shown in FIGS. 21-24 indicates the operating path of the radial magnetic flux) flows to the two ends via the outer magnet core 7 and then flows into the inner magnet core 5 via the magnetic circuit of the two ends, finally returns to the radial permanent magnet 8, where two parallel magnetic circuits are formed. As shown in FIG. 21, for the upper electromagnet assembly 2, when the armature 4 moves away from the upper pickup surface 2a, the magnetic resistance between the armature 4 and the upper pickup surface 2a is very high, and the magnetic flux of the radial permanent magnet 8 flowing through the armature 4 is little. As shown in FIG. 22, when the armature 4 is being picked up to the upper pickup surface 2a, the magnetic resistance between the armature 4 and the upper pickup surface 2a is very low and the magnetic flux flowing through the armature 4 and the upper pickup surface 2a is relative high, thus retaining the armature 4 on the position where it contacts with the upper pickup surface 2a. When release is needed, a reverse exciting current through the coil winding 6a of the upper electromagnet assembly 2 is supplied to make the direction of the magnetic field emitted by the upper pickup surface 2a opposite to that by the radial permanent magnet 8; even though the magnetic flux of the armature 4 and the attraction force reduce, when the magnetic force is lower that the spring force of a valve spring 9, the attraction force retaining state will be relieved and the armature 4 will be released, thus breaking away from the upper pickup surface 2a. Here, the upper electromagnet assembly 2 is taken as an example to illustrate, yet technicians in this field shall understand that the pickup and release process between the armature 4 and the lower electromagnet assembly 3 is similar.

In embodiments of this invention, the structure of the radial permanent magnet 8 and the coil kit 6 can optimize the magnetic circuit of the permanent magnet linear motor, to form a parallel permanent magnetic circuit, realize permanent magnet pickup type retaining, reduce (or removing) valve retaining current significantly as well bring down the range of variation of the magnetic strength in the magnetic circuit, thus lowing the core loss.

The magnetic field of a mono-polar radial permanent magnet linear motor rotor will pass through the coil kit 6 in a radial way, and in order to ensure sufficient electromagnetic force and a lower resistance, the coil kit is required to have a relatively large thickness; here, a structure with the coil winding 6a and the magnetizer 6b winding by turns is adopted to reduce the working air gap of the magnetic circuit significantly.

Each valve spring 9 is installed in a valve spring seat 9a compressed. The valve spring valve 9a is disposed inside the inner magnet core 5, and the valve spring 9 each has its one end push against the spring valve 9a and the other end push against the armature 4. When the attraction force between the armature 4 and the pickup surface is greater than the spring force of the valve spring 9, the armature 4 will be picked up to the pickup surface; and when the former is lower than the latter, the armature 4 will be released.

A valve sleeve 10b is mounted on the upper part of the valve rod 10; the valve rod 10 can be disposed inside the valve sleeve 10b in a sliding way. The valve sleeve 10b is fixed on the cylinder head of the motor. The top of the valve sleeve 10b is provided with a valve seal 10c

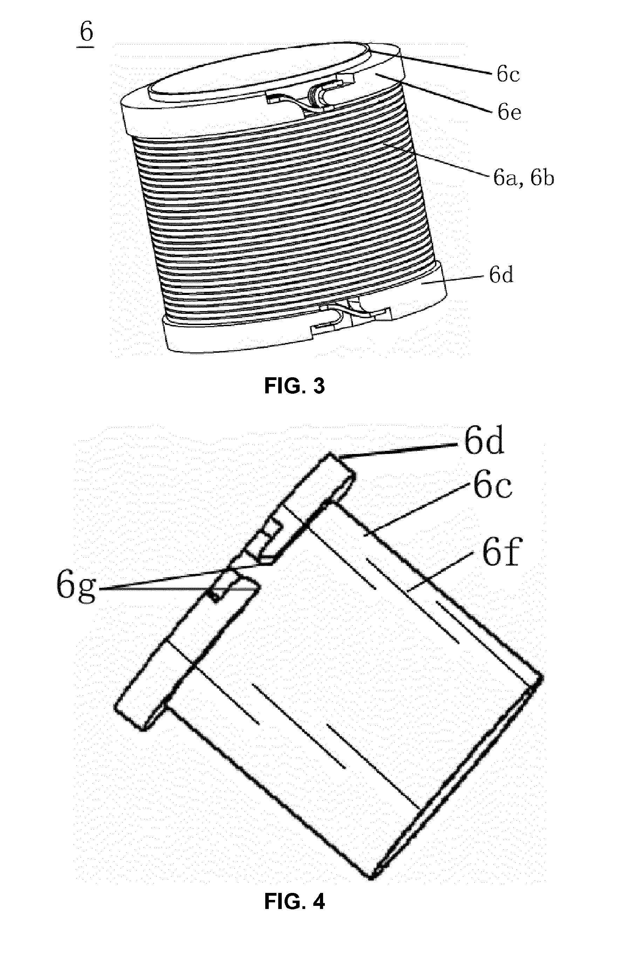

As shown in FIGS. 3-5, the coil kit 6 further comprises a cylindrical coil former 6c, which is disposed outside the inner magnet core 5. The coil winding 6a and the magnetizer 6b wind the cylindrical coil former 6c by turns. The cylindrical coil former 6c comprises a coil cover 6d on its nearer end to the armature 4 and a separate coil cover 6e on the other end. The coil cover 6d can be made of high-resistance high-magnetic conduction materials (e.g. iron core), and the separate coil cover 6e can be made of magnetic conduction or non-magnetic high-resistance materials (e.g. iron core or epoxy resin).

The radial permanent magnet 8 can be disposed either between the inner magnet core 5 and the coil kit 6 or between the coil kit 6 and the outer magnet core 7. In the example, it is the former case, namely, space is left between the inner magnet core 5 and the coil kit 6 for the radial permanent magnet 8 to be disposed in and to move up and down. Between the outer wall of the inner magnet core 5 and the inner wall of the joint liner ring 12a is a first air gap 11 which is used to increase the magnetic resistance.

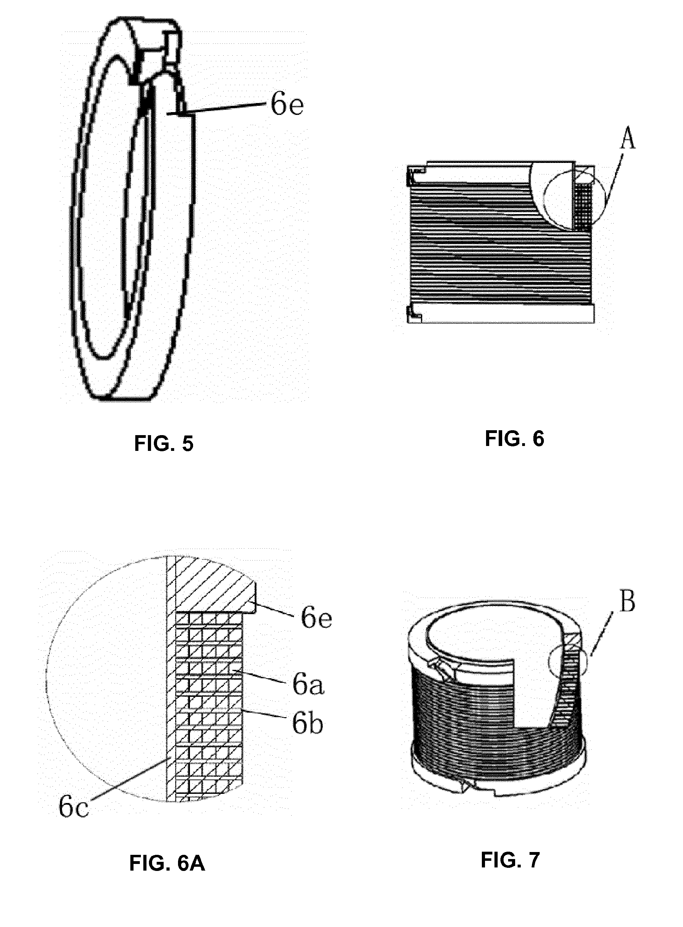

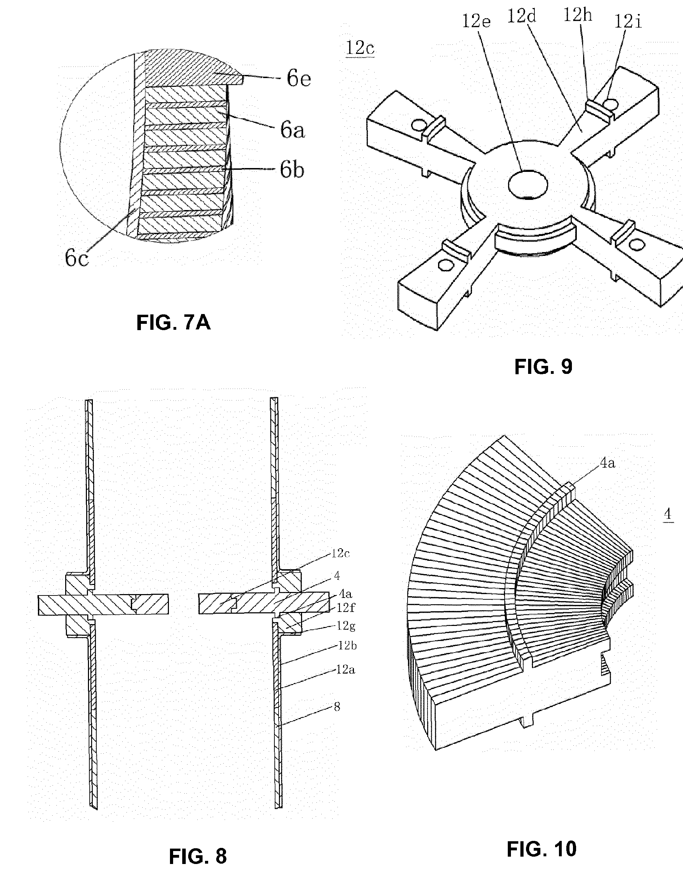

In an example, the structure with the coil winding 6a and the magnetizer 6b winding by turns may have the following two kinds of modes so as to facilitate efficient processing. One is as shown in FIG. 6 and FIG. 6A: the coil winding 6a has multiple layers of windings, each layer winding outside the coil former rack shell 6e in a spiral way from the top down, with spacing in between; all layers of the coils are aligned with one another from inside to outside with the coils of two adjacent layers connected end to end, and in the spacing between the coils is disposed the magnetizer 6b. The other is as shown in FIG.7 and FIG. 7A: the coil winding 6a is made of strip conductors, the magnetizer 6b is a magnetic conduction strip, e.g. silicon strip, the strip conductors wind the cylindrical coil former 6c in a spiral way with spacing, and the strip conduction strip also winds the cylindrical coil former 6c in a spiral way, which is disposed just in the spacing of the strip conductors. In another words, the strip conductors wind the cylindrical coil former 6c spirally and seen from the longitudinal cross-section of the cylindrical coil former 6c, the strip conductors have spacing in between themselves and the magnetic conduction strip is disposed in the spacing by winding in a spiral way. Hence, the strip conductors and the magnetic conduction strip adopt a mode of overriding vertical coil winding, forming an overriding structure of equi-directionally, spirally and vertically wound conductors and spirally and vertically wound magnetizer.

In a second winding structure, since the magnetizer 6b has no current in it and the electric potential is equal, the voltage between an adjacent conductor and the magnetizer can be as high as the voltage at both ends of the coil, thus the insulation thickness between the conductor and the magnetizer is required to be increased. In order to solve this problem, paralleling silicon strip and coil are adopted, make it possible for the electric potential of the silicon strip and the coil to change, and the voltage between the adjacent conductor and the silicon plate is reduced significantly. The method of short-connecting both ends of the silicon strip with those of the conductor can be adopted or the strip conductor can be superposed with the silicon strip without insulation, then coat the double-layer structure with insulation materials and finally wind for coils, making the electric potential of adjacent conductor and silicon plate equal and reducing the insulation thickness among coils. Since the magnetic field emitted from the permanent magnetic ring is radial, the macro-sectional area in the magnetic circuit reduces with the radius decrease; in order to balance the magnetic strength in the magnetic circuit and take full advantage of the magnetic conduction materials, the internal and external thickness of the magnetizer is designed to be inversely proportional to the internal and external perimeter (or diameter), thus the section is thick internally and thin externally, making the section area of the magnetic conduction part relatively stable; in order to make the internal and external thickness of the coil after superposing consistent, the strip conductor is thin internally and thick externally, thus balancing the thickness variation of the magnetizer.

As an example of this invention, as shown in FIG.4, the cylindrical coil former 6c is made of high magnetic conduction and low resistance materials (e.g. silicon steel), and discontinuous and staggered longitudinal seams 6f are cut on the cylindrical coil former 6c so as to cut off the ring current and lower the eddy current. Furthermore, in order to cooperate with the coil closely, the pressure surface of coil cover 6d can be a spiral surface 6g, and the helical pitch is the conductor thickness, namely, the overall thickness of the conductor and the silicon strip.

In an example, as shown in FIGS. 8-12, in the actuation compound rotor, the armature 4 is connected with the radial permanent magnet 8 via a joint liner ring 12a and a joint sleeve 12b. The joint sleeve 12b has a tubular construction, which fixes a joint liner ring 12a and the radial permanent magnet 8 together; one end of the joint liner ring 12a is connected with the armature 4 and the other is connected with the radial permanent magnet 8. That's to say, the radial permanent magnet is not connected directly with the armature 4, instead, the joint liner ring 12a is connected in series with the radial permanent magnet 8 in the direction close to the armature 4. The diameter and thickness of the joint liner ring 12a are the same with those of the radial permanent magnet 8; the joint sleeve 12a is magnetic conductive while the joint liner ring 12a is not magnetic conductive generally.

In this embodiment, due to the limitation of volume, the inner and outer magnet cores 5 and 7 of the upper and lower electromagnet assemblies 2 and 3 restrict the increase of the magnetic flux, and the radial permanent magnetic ring 8 cannot be too high; in order to make the permanent magnet ring in the middle of the coil kit in most cases, the joint liner ring 12a is disposed between the radial permanent magnet 8 and the armature 4, this structure allows the magnetic flux to flow in two directions.

The radial permanent magnets 8 of both the upper and lower electromagnet assemblies 2 and 3 can be connected with the armature 4 to form the actuation compound rotor. Optionally, one of the radial permanent magnets 8 of the upper and lower electromagnet assemblies 2 and 3 can be connected to with the armature 4 to form the actuation compound rotor, with the other fixed between the inner magnet core 5 and the outer magnet 7 and does not move along with the actuation compound rotor.

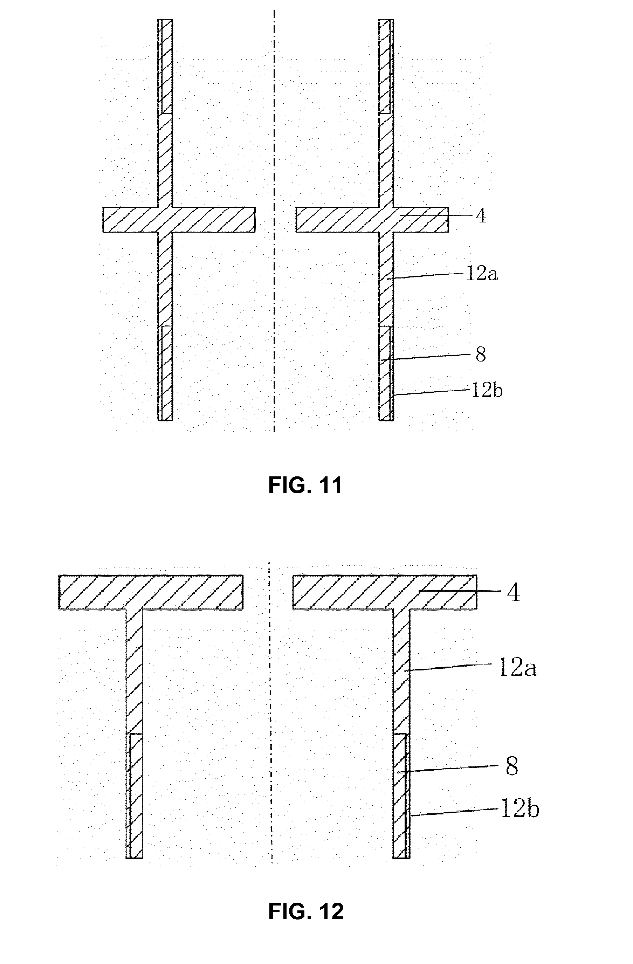

In one of the embodiments, as shown in FIGS.11-12, the actuation compound rotor is an integral type rotor, the radial permanent magnet 8 is embedded inside the joint sleeve 12b and the joint sleeve is connected with the joint liner ring 12a. As shown in FIG. 11, both the upper and lower radial permanent magnets 8 are connected with the armature 4 to form the actuation compound rotor, namely, the two compound rotors are connected. In FIG. 11, the armature 4 is fixed concentrically together with both the upper and lower radial permanent magnets 8 via the joint liner ring 12a and the joint sleeve 12b. FIG.12 shows one of the radial permanent magnet 8, e.g. the radial permanent magnet 8 in the lower electromagnet assembly 3 is connected with the armature 4 to form the actuation compound rotor. In FIG. 12, the armature 4 is fixed concentrically together with one radial permanent magnet 8 via the joint liner ring 12a and the joint sleeve 12b while the other set of the radial permanent magnet 8 is directly fixed between the inner magnet core 5 and the outer magnet core 7 where no rotors pass through, making the performance of the parallel magnetic circuit remain constant.

In a second embodiment, as shown in FIG. 8, the actuation compound rotor is a combined-type compound rotor. The combined-type compound rotor also comprises the armature bracket 12c, which comprises a plurality of radiation frames 12d with a uniform distribution (refer to FIG. 9). The armature 4 is disposed between the radiation frames. A mounting hole 12e is disposed in the center of the armature bracket 12c and connected with the valve rod 10. In addition, each radiation frame 12a is provided with a locating step 12h, disposed outside which is a joint hole 12i. According to FIG. 10, the armature 4 is an armature overlapping fan comprising fan-shaped magnetic sheets. The armature 4 can be concentrically installed with the armature locating step 4a.

Furthermore, the combined-type compound rotor also comprises a locating ring 12f clamping the armature 4; one end of the joint liner ring 12a is connected to the armature 4 via the locating ring 12f and one end of the joint sleeve 12b close to the locating ring is disposed with a sleeve flange 12g; the joint sleeve 12b is disposed at the side of the joint liner ring 12a and integrates the joint liner ring 12a and the radial permanent magnet 8 into a whole, and the sleeve flange 12g is concentrically superposed on the locating ring 12f. Then, a screw is threaded through the sleeve flange 12g and the armature bracket joint hole 12i to fix them. Moreover, a locating step is disposed on the locating ring 12f, one side of the locating step is matched up with the armature locating step 4a and the armature bracket locating step 12h and the other side cooperates well with the joint liner ring 12a to realize a positioning function. In this embodiment, the locating ring 12f can strengthen the armature 4 comprising the fan-shaped magnetic sheet and realize a positioning function. The radial permanent magnet 8 is a ring-shaped magnet with its interior and exterior each as one pole, and covers the joint sleeve 12b. The sleeve flange 12g presses on the locating ring 12f and is installed on the armature 4 and fixed with screws. In order to reduce the magnetic resistance of the magnetic circuit and increase the magnetic field, the joint sleeve 12b is made of magnetic conduction materials. Besides, the locating ring 12f can adopt high-resistance non-magnetic conduction materials and high mechanical strength materials, mainly to strengthen the armature 4. Generally, the sleeve flange 12g and the joint liner ring 12a adopts high-resistance non-magnetic conduction materials and the joint sleeve 12b adopts high-resistance and highly magnetic conduction materials.

In a second embodiment of the compound rotor above, the combined-type compound rotor can be changed to one with only one linear motor rotor, i.e. the joint sleeve 12b, joint liner ring 12a, radial permanent magnet assembly 8, armature 4, locating ring 12f, and sleeve flange 12g are superposed concentrically in proper sequence and fixed together with a screw through the armature bracket joint hole 12i to constitute a combined-type compound rotor with a single radial magnet; at the same time, another set of joint sleeve 12b, joint liner ring 12a, radial permanent magnet assembly 8 and armature 4 are directly fixed between the inner magnet core 5 and the outer magnet core 7.

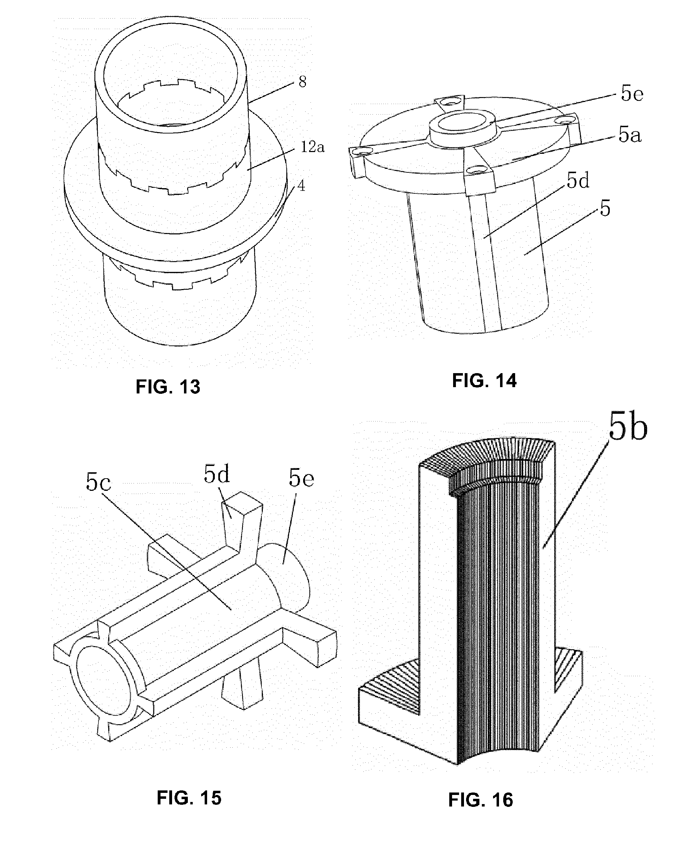

In a third embodiment, as shown in FIG. 13, the actuation compound rotor is an integral-type compound rotor, the radial permanent magnet 8 is connected with the armature 4 via the joint liner ring 12a, and between the radial permanent magnet 8 and the joint liner ring 12a, and between the joint liner ring 12a and the armature 4, a toothed engagement is employed, where the armature 4 and the joint liner ring 12a adopt the method of powder metallurgy to be pressed and fixed together with the radial permanent magnet 8, and the joint liner ring 12a can adopt high-resistance non-magnetic material (such as epoxy resin with increased oxide particles). In this embodiment, the structure of the joint sleeve 12b in the embodiment above is cancelled.

As shown in FIG. 14, the bottom of inner magnet core 5 is provided with a connection member 5a, and the connection member 5a is fixedly connected with the bottom surface (the surface farther from the armature 4) of the outer magnet core 7, or a second air gap 13 for increasing the magnetic resistance is disposed between the bottom surface of outer magnet core 7 and the connection member 5a.

Specifically, the inner magnet core 5 comprises a magnetic group 5b and a cylindrical inner magnetic core frame 5c (refer to FIGS. 15-16). The magnetic group 5b comprises a plurality of fan-shaped magnetic sheets comprising L-shaped longitudinal sections. The outer wall of cylindrical inner magnetic core frame 5c is uniformly disposed with multiple stiffeners 5d that are distributed in the axial direction and the magnetic group 5b is fixed among the stiffeners 5d and tightly attached to the outer wall of the cylindrical inner magnetic core frame 5c. End surface of the cylindrical inner magnetic core frame 5c of the lower electromagnet assembly 3 is provided with a locating step 5e to install the stoke adjusting cylinder body.

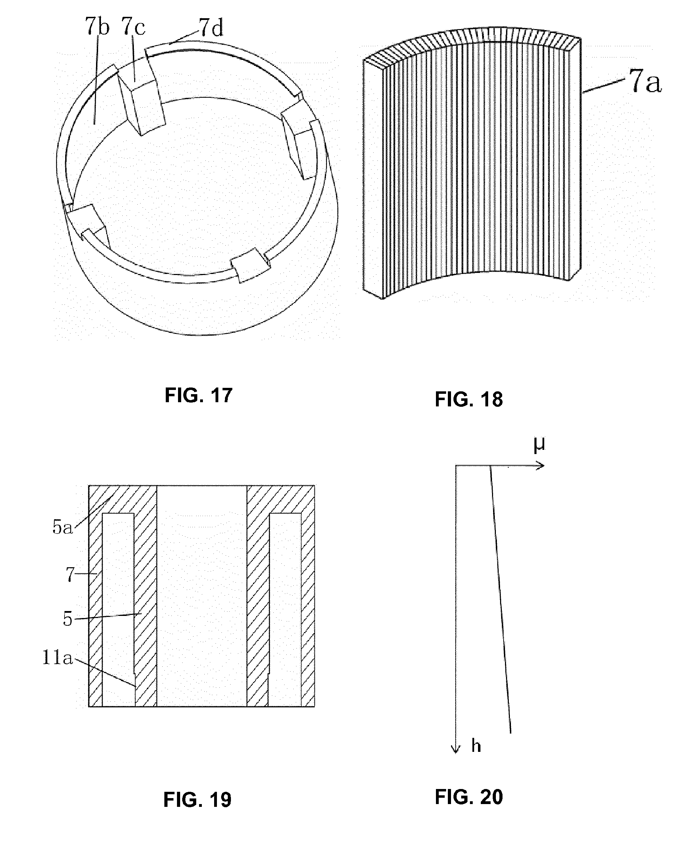

Refer to FIGS. 17-18, the outer magnet core 7 comprises multiple outer magnet core body 7a comprising fan-shaped magnetic sheets and a cylindrical outer magnetic core frame 7b. The inner wall of the cylindrical outer magnetic core frame 7b is provided with many outer magnet core stiffeners 7c protruding inwards and one of its end surfaces is installed with a positioning flange 7d. The outer magnet core body 7a is installed between the outer magnet core stiffeners 7c and fitted with the positioning flange 7d.

In this example, when the armature 4 of the actuation compound rotor is combined with the upper and lower pickup surfaces 2a and 3a, the radial permanent magnet 8 will produce absorption force. In the magnetic circuit constituting the linear motor, magnetic flux split flows to two ends. Permanent magnet can produce absorption force, but in case that it is incapable of producing enough absorption force, this example chooses to increase the magnetic resistance on the original linear motor, which can substantially increase the magnetic flux passing through the armature 4 during the pickup of the armature 4 to ensure sufficient absorption force for the pickup of the armature 4 and the pickup surfaces 2a, 3a, and to retain the valve closed or open. Here, there are two methods to increase the magnetic resistance:

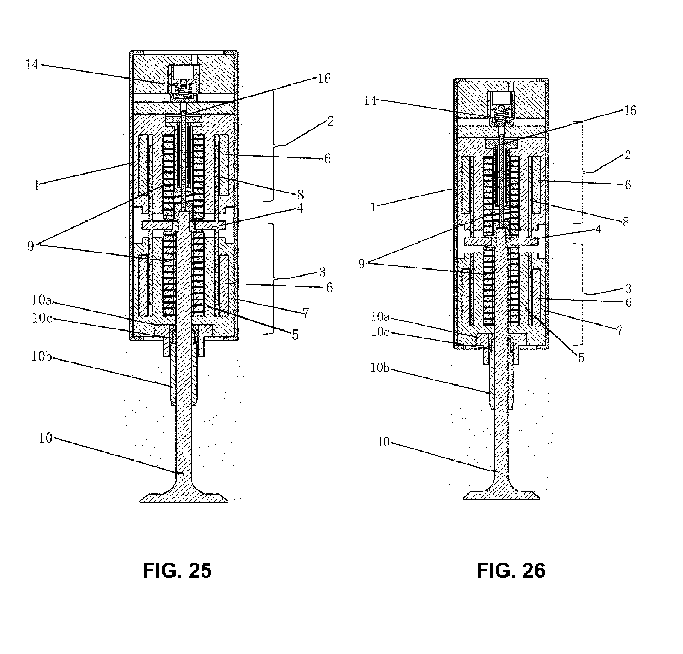

A first method to increase the magnetic resistance is to expand the air gap. There is a first air gap 11 in the open end of the magnet core. When the joint liner ring is a magnetizer, e.g. the first air gap 11 exists between the outer wall of the inner magnet core 5 and the inner wall of the joint liner ring 12a, and the inner wall of the outer magnet core and the outer wall of the joint liner ring 12a (refer to FIGS. 21-22). For example, in FIG. 19, the outer wall of the inner magnet core 5 has a groove 11 a on its open end side to facilitate the formation of first air gap 11. When the joint liner ring 12a is not a magnetizer, it is acceptable to use the equivalent air gap effect of a non-magnetic joint liner ring 12a to form the air gap between the inner and outer magnet cores. For example, in FIGS. 25-27, there is no air gap. A second air gap 13 is provided close to the bottom of the magnetic circuit of the inner and outer magnet core 5, 7 in the electromagnet assembly 2, 3, e.g. a second air gap exists between the bottom surface of the outer magnet core 7 and the connection member 5a. Here, the thickness of the air gap 11 and 13 depends on the accuracy of manufacture and control precision. The higher accuracy is, the smaller air gap and energy consumption are, meanwhile the working clearance between the armature 4 and pickup surface is also lowered; e.g. here the thickness of the air gap can be 0.1-0.2 mm.

A second method to increase the magnetic resistance is to change the magnetic conductivity. In FIG. 19, the bottom surface of the outer magnet core 7 is fixedly connected with the connection member 5a, and no air gap exists between them. Here, the inner magnet core 5, outer magnet core 7 and connection member 5a are made of integral iron cores. The magnetic conductivity of the inner magnet core 5 and outer magnet core 7 is reduced in the direction from the pickup surface 2a and 3a to the connection member 5a, and the magnetic conductivity of the connection member 5a is also relatively low. Besides, the joint liner ring 12a can be made from non-magnetic and high-resistance materials to increase the magnetic resistance in the open end of the inner and outer magnet cores. Abscissa "h" as shown in FIG. 20 represents the amount of height change of the magnet core from the open end to the closed end, and the ordinate "µ" represents the amount of magnetic conductivity change; FIG. 20 shows the gradual decrease of the integral magnet core from the open end to the closed end.

A manufacturing method of the magnetic conductivity changeable iron core can be: changing the proportion of insulation materials to form the gradient of magnetic conductivity decrease from the open end to the closed end of iron core, or single-direction suppressing by setting the suppressing punch on the opening part to result in the reduction of density of magnet core from the open end to the closed end owing to the friction, thus causing a higher magnetic conductivity in the open end.

Furthermore, the structure of the permanent magnetic linear motor formed in the mode of execution can generate electromotive force to reduce the actuation current when the armature 4 is farther from the pickup surface. The method to increase air gap or change magnetic conductivity can be used to enhance the magnetic resistance around the connection member 5a and the magnetic circuit of the coil cover 6d, thus the magnetic resistance of the magnetic circuit of linear motor is not too high when the armature 4 gets released to ensure the working magnetic strength of the linear motor, meanwhile the magnetic resistance between the armature 4 and the pickup surface during the pickup of the armature 4 is greatly reduced and the magnetic flux through the armature 4 and pickup surface is substantially increased, thus generating sufficient absorption force.

The specific magnetic circuit and working process is: the radial magnetic flux 8a emitted by the radial permanent magnet 8 flows to the two ends via the outer magnet core 7 and then flows into the inner magnet core 5 via the magnetic circuit of the two ends, and returns to the radial permanent magnet 8. Thus, two parallel magnetic circuits are formed. For the electromagnet assembly, when the armature 4 moves away from the upper pickup surface 2a, the magnetic resistance between the armature 4 and the upper pickup surface 2a is very high, and the magnetic flux of the radial permanent magnet 8 flowing through the armature is little. On both ends of the inner and outer magnet cores 5 and 7, most of the magnetic flux 8a flows through the connection member 5a and the magnetic conduction coil cover 6d; when the armature 4 is being picked up to the upper pickup surface 2a, the magnetic resistance between the armature 4 and the upper pickup surface 2a is very low. Since the air gap 11 and 13 in the magnetic circuit can increase the magnetic resistance, the magnetic flux flowing through the connection member 5a and the magnetic coil cover 6d is reduced and that flowing through the armature 4 and the upper pickup surface 2a is increased to make the armature 4 retained in its pickup status. When release is needed, reverse exciting current goes through the coil winding 6a, thus the magnetic flux of the armature 4 is reduced and the absorption force is also decreased, eventually the armature 4 gets released. The abovementioned parallel magnetic circuit retaining mechanism can cancel the retaining current, decrease the demagnetizing effect of permanent magnet and the magnetic strength variation of the magnetic circuit, and reduce the energy consumption.

In addition, when adopting the structure of the inner magnet core 5 shown in FIG. 14 and the structure of the outer magnet core 7 shown in FIG.S 17 and 18 to realize a second air gap 13 between the bottom surface of the outer magnet core 7 and the connection member 5a which has the function of increasing magnetic resistance, the separate coil cover 6e shall be made from high-resistance non-magnetic materials to avoid itself to offset the effect of air gap 13. When adopting the integral magnet core structure shown in FIG. 19, the separate coil cover 6e can be made from high-resistance magnetic conduction materials (such as epoxy resin) or high-resistance non-magnetic materials (such as iron core) .

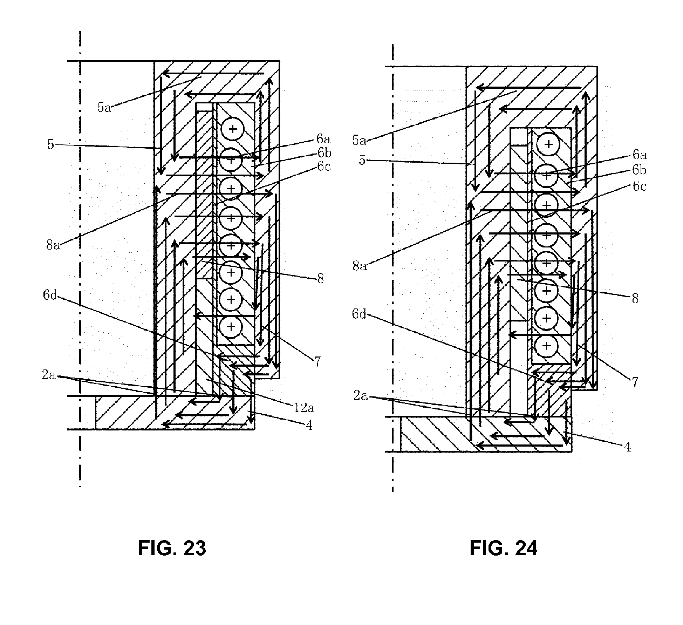

In FIG. 23, the actuation compound rotor comprises the armature 4, the radial permanent magnet 8 and a joint liner ring 12a. The joint liner ring 12a is made of non-magnetic materials (such as epoxy resin), the magnetic coil cover 6d works closely with the outer magnet core 7, the end surface of the magnetic coil cover 6d is aligned with the inner magnet core 5, the end surface of the outer magnet core 7 is lower than the inner magnet core 5, the outer diameter of the armature 4 is equal to that of end surface of magnetic coil cover 6d, and other structures is in conformity to FIG. 22. When the armature 4 moves away from the pickup surface, the system works mainly in a linear motor state and the permanent magnetic flux through the armature 4 is relatively low; when the armature 4 gets closer to the pickup surface, the system works mainly in an electromagnetic state and the permanent magnetic flux through the armature is relatively high and can achieve the permanent magnetic pickup. Compared with the structure shown in FIG. 22, this structure is much simpler and the diameter of the armature 4 is also reduced.

In the actuation system shown in FIG. 24, the armature 4 is independent and separated from the radial permanent magnet 8 and has no function of a linear motor; instead, it only applies the function of permanent magnetic pickup retaining and the motion mass of the system reduces. In this case, it is acceptable to lower the spring requirements, yet the energy consumption will increase and it will be more control difficulty.

In the actuation system shown in FIG. 25, the tooth-type integral compound rotor is adopted. The magnet core (comprising inner and outer magnet cores) adopts those with integral gradient magnetic conductivity as shown in FIG. 19, and the magnetic circuit is that as shown in FIG. 23. An embedded fixed barrel 10a is provided to facilitate the connection with the motor. A stoke adjusting mechanism is not provided in FIG. 25.

In the actuation system shown in FIG. 26, there is only one radial permanent magnet 8 installed in the actuation compound rotor, and another radial permanent magnet 8 fixed between the inner magnet core 5 of the lower electromagnet assembly 3 and the coil kit 6. This embodiment can lower the motion mass and remain the function of linear motor.

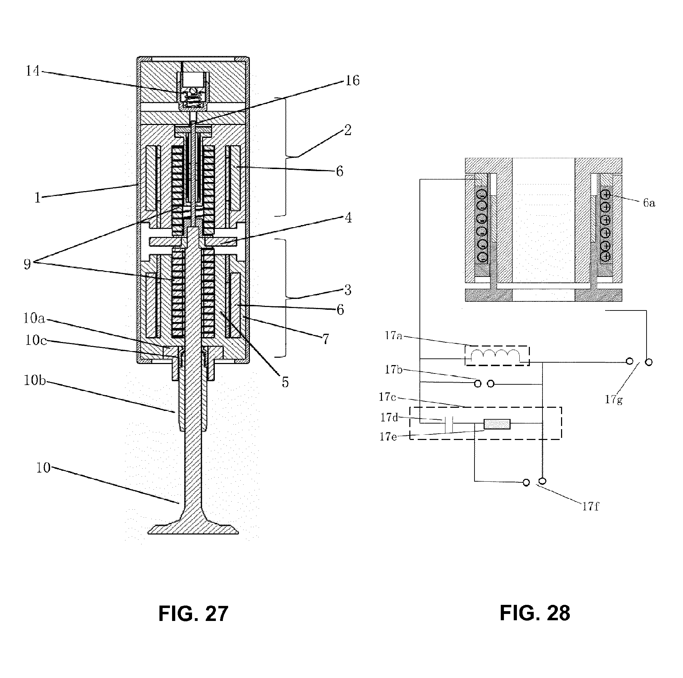

In the actuation system shown in FIG. 27, the actuation compound rotor is changed into an independent armature 4 and an independent permanent magnet 8. This embodiment can lower the motion mass and reduce the size and mechanical difficulties properly, yet it does not have the function of linear motor and the energy consumption will rise.

As shown in FIG. 2, the actuation system also comprises a gap adjusting mechanism 14. The valve head is exposed to high-temperature gas, therefore, if the temperature of the motor is higher than that of other parts of electromagnetic actuation system while the motor is running, the distance between the armature 4 and the pickup surface will be shortened, and meanwhile the abrasion of valve will also shorten the distance between the armature 4 and the pickup surface. Consequently, in order to ensure normal operation, the distance between the armature 4 and pickup surface is required to be lengthened, otherwise, when the valve rod 10 elongates owing to the temperature rise, the valve cannot be closed tightly. In order to ensure the absorption force of the pickup surface after lengthening the distance between the armature 4 and the pickup surface, the distance between the resistance-increasing air gap 11 and 13 needs to be elongated. In the case of same permanent magnetic ring, the working magnetic field shall be reduced; eventually the working current and energy consumption will be increased. To overcome the above-mentioned problems (refer to FIG.S 25-27), a gap adjusting mechanism 14 is installed in the actuation system to keep the distance between the armature 4 and the upper pickup surface 2a at a proper value.

Specifically, the gap adjusting mechanism 14 comprises a gap adjusting hydraulic cylinder, and the gap adjusting hydraulic cylinder has a gap adjusting cylinder body 14a and a gap adjusting piston 14b that can slide up and down and is connected to the gap adjusting cylinder body 14a. The gap adjusting cylinder body 14a is fixedly connected to the actuation housing 1. One end of gap adjusting piston 14b presses on the surface of upper electromagnet assembly 2. Besides, clearance fit is used between the gap adjusting piston 14b and the gap adjusting cylinder body 14a to allow the leakage of internal liquid due to external pressure.

Furthermore, a one-way valve is installed on the inlet of gap adjusting cylinder body 14a and connected with motor lubricant. When the valve is closed, namely the armature 4 and the upper pickup surface 2a are in a pickup status, the armature 4 will produce relatively large downward pull towards the upper electromagnet assembly 2. The absorption force of the armature 4 is adjusted to make the pull higher than the pressure of the valve spring 9, thus reducing the pressure of the gap adjusting cylinder body 14a, then the one-way valve is open and external lubricant fills the gap adjusting cylinder body 14a. When the armature 4 is in other states, the downward pull of the armature 4 towards the upper electromagnet assembly 2 is very low, the gap adjusting piston 14b makes the one-way valve closed under the pressure of the spring, and lubricant slowly leaks through the gap between gap adjusting cylinder body 14a and the gap adjusting piston 14b. The process does not need human control.

As an example, as shown in FIG. 2, the actuation system also comprises a stoke adjusting mechanism 15 which is used to adjust the stroke of the valve rod 10 dynamically.

Specifically, the stoke adjusting mechanism 15 comprises a stoke adjusting hydraulic cylinder. The stoke adjusting hydraulic cylinder comprises a stoke adjusting cylinder body 15a and a stoke adjusting piston 15b. The stoke adjusting piston 15b can slide up and down and is connected to the stoke adjusting cylinder body 15a. The stoke adjusting cylinder body 15a is fixedly connected on the actuation housing 1. One end of the stoke adjusting piston 15b is against the lower surface of the lower electromagnet assembly 3. The lower pickup surface 3a of the lower electromagnet assembly 3 can float up and down under the push of the stoke adjusting piston 15b. As the position of the pickup surface 3a is adjusted, the mobile distance of the armature 4 is changed, i.e. the stroke of the valve rod 10 which is fixedly connected with the armature 4 is adjusted.

Furthermore, an inlet with a one-way valve and an outlet with a priority valve are disposed in the stoke adjusting cylinder body 15a. The inlet and outlet of the stoke adjusting hydraulic cylinder of the same kind valves of all different cylinders are connected in parallel respectively and then connected to the oil line by an electronically controllable valve. As the compression amount of the valve spring 9 changes periodically in the process of the valve rod 10 driving the movement of the armature 4, the pressure in stoke adjusting cylinder body 15a also changes periodically, either higher than external oil line pressure or lower than external pressure. At the same time, the working phase of the valve of each cylinder is different. Therefore, the inlet and outlet valve of the stoke adjusting cylinder body 15a of different cylinders can be opened according to phases. By controlling the on and off time, the inlet and outlet amount of each stoke adjusting cylinder body 15a can be controlled and the valve stroke can be controlled through detecting displacement and speed sensor.

As shown in FIG. 28, the actuation system also comprises an inductive circuit device for measuring displacement. The circuit device comprises an inductor 17a and an actuation power supply 17g. The inductor 17a, the actuation power supply 17g and the coil winding 6a are connected in series. An inductance detecting terminal 17b is connected with two ends of the inductor 17a and a differential circuit 17c is connected with two ends of the inductor 17a. The differential circuit 17c here can be a resistance-capacitance differential circuit, but not limited to this. Specifically, connect a differential capacitor 17d and a differential resistor 17e in series, and then connect them to the both ends of the inductor 17a in parallel and lead out an inductance differential sampling terminal 17f at both ends of the differential resistor 17e. Collect voltage at two detection terminals 17b and 17f with the sampling method synchronous to the PWM control of the actuation power supply 17g. The voltage of the inductance detecting terminal 17b is in inverse proportion to the inductance of the electromagnet. The inductance differential detection terminal 17f is in direct proportion to the change rate of inductance. The inductance of the electromagnet assembly is in a function relationship with the pickup distance of the armature 4. Through experimental method, the model of relation between the voltage of two detection terminals 17b and 17f and the position and movement speed of the armature 4 can be determined. Through calculation method, the position and the movement speed of the armature 4 can be got.

This execution mode can get position parameter with low cost, i.e. get the voltage and the change rate of the voltage on inductor 17a or get the distance between the armature 4 and the pickup surface of the electromagnet assembly according to the principle that the inductance of electromagnet assembly will increase with the decrease of the distance of the armature 4.

The top of the valve rod 10 is disposed with a speed sensor 16, which can be a radial permanent magnet ring rotor speed sensor, a radial permanent magnet columnar rotor speed sensor or an axial permanent magnet columnar rotor speed sensor.

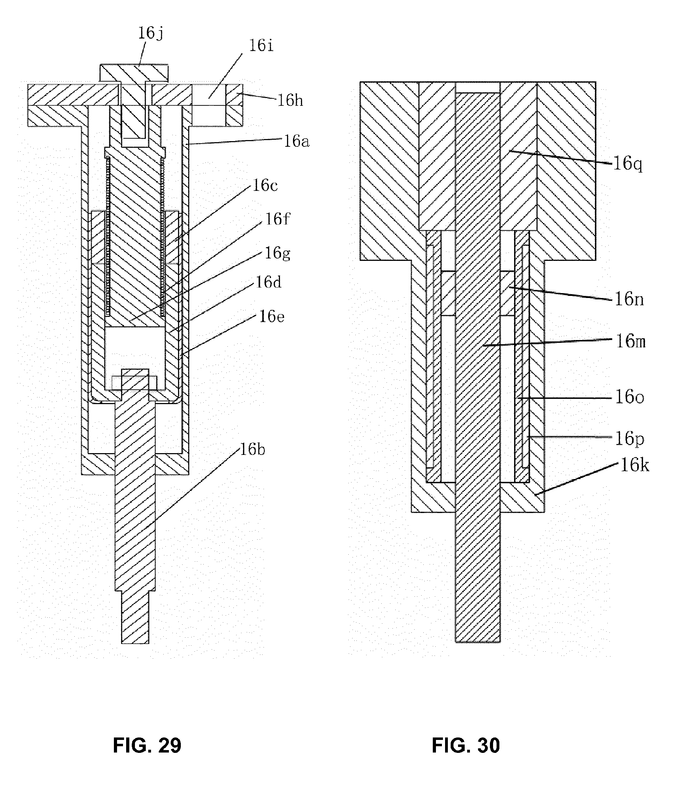

Specifically, the radial permanent magnet ring rotor speed sensor is as shown in FIG. 29. The speed sensor 16 comprises a sensor shell 16a and an annular rotor. The annular rotor is capable of sliding and fitted to the bottom of the sensor shell 16a. The annular rotor comprises an actuation rod 16b, radial magnet 16c, non-magnetic conduction ring 16d and joint coat 16e. The radial magnet 16c and non-magnetic conduction ring 16d are connected end to end and fixed on the inner wall of the joint coat 16e. The actuation rod 16b is fixedly connected on the joint coat 16e. The joint coat 16e can be capable of sliding and disposed on the inner wall of sensor shell 16a. An upper part of the annular rotor presents a tubular shape. The bottom of the inner magnet core of sensor 16g wound with the sensor coil 16f is connected to the inner side of the annular rotor. The top of the inner magnet core of sensor 16g is fixedly connected on the sensor shell 16a and the actuation rod 16b is fixedly connected with the valve rod 10.

Here, the top of the inner magnet core of sensor 16g is fixedly connected to the sensor shell 16a through an end cover 16h. Furthermore, the end cover 16h is fixed with the flange plate on the sensor shell 16a through a mounting hole 16i by screw 16j. The non-magnetic conduction ring 16d can be high-resistance non-magnetic conduction ring and the sensor shell 16a can be made of magnetic conduction materials.

The radial magnet 16c moves up and down with the valve rod 10 through the actuation rod 16b and produces voltage in direct proportion to movement speed in the sensor coil 16f. The screw can adopt non-magnetic conduction materials so as to lower the magnetic conduction section of this part and stabilize the magnetic field.

Specifically, the radial permanent magnet columnar rotor speed sensor is as shown in FIG. 30. The speed sensor 16 comprises a sensor shell 16k and a columnar rotor. The bottom of the columnar rotor is capable of sliding and fitted to the bottom of sensor shell 16k. The columnar rotor comprises an actuation rod 16m and a radial magnet 16n. The radial magnet 16n is fixed in the middle outside the actuation rod 16m. The outside of the columnar rotor is disposed with a sensor coil former 16o wound with a sensor coil 16p. The sensor coil former 16o is fixed on the inner wall of the sensor shell 16k. The top of the actuation rod 16m is capable of sliding and fitted on a hollow clamping screw 16q. The hollow clamping screw 16q is fixed in the reserved hole of the sensor shell 16k and the actuation rod 16m is fixedly connected to the valve rod 10.

The sensor coil 16q, sensor coil former 16o, and sensor shell 16k can be compressed to a whole by using iron cores separately.

The columnar rotor comprising the actuation rod 16m and the radial magnet 16n moves up and down with the valve rod 10 and produces voltage in the sensor coil 16q in direct proportion to movement speed.

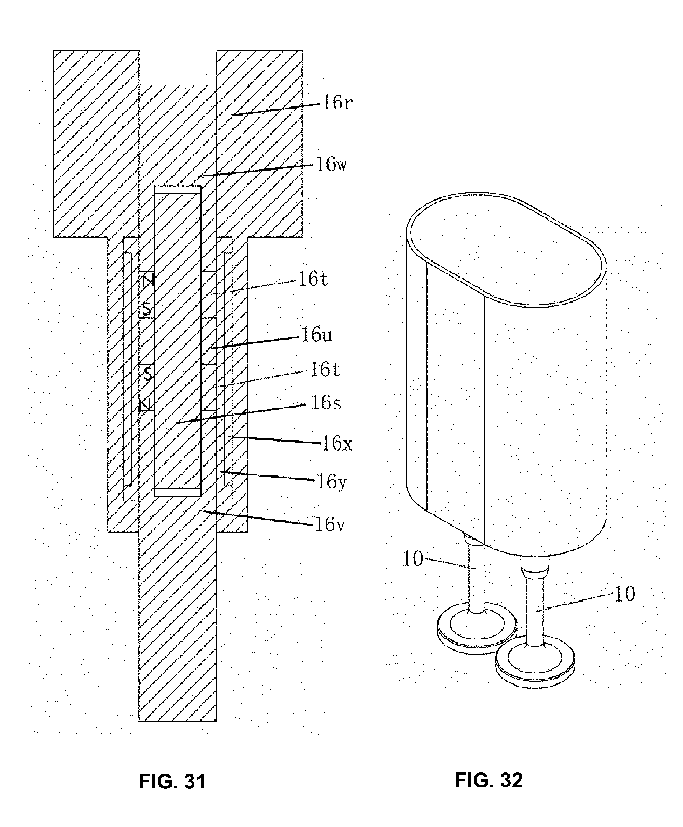

Specifically, the axial permanent magnet columnar rotor speed sensor is as shown in FIG. 31. The speed sensor 16 comprises a sensor shell 16r and a linear motor rotor, and the linear motor rotor is capable of sliding and fitted to the sensor shell 16r. The linear motor rotor comprises a non-magnetic conduction rod 16s, two axial magnet rings 16t with opposite poles, one magnetic conduction ring 16u, an actuation rod 16v, and a guide rod 16w. The magnetic conduction ring 16u is sandwiched between the two axial magnet rings 16t and fixed outside the non magnetic conduction rod 16s. The guide rod 16w and the actuation rod 16v are fixed at two ends of the non-magnet conduction rod 16s, respectively; a sensor coil former 16y wound with a sensor coil 16x is fixed on an inner wall of the sensor shell 16r concentrically and connected to the outside of the linear motor rotor. The actuation rod 16v is fixedly connected to the valve rod 10.

The sensor coil 16x, sensor coil former 16y, and sensor shell 16r can be compressed to a whole by using iron cores separately.

The working process of the actuation system of this embodiment is as following:

Step 1: initialize the valve and inspect the state of each sensor of the system. For inductive position and speed measurement circuit, judge the pickup state of valve actuation armature 4 though the method of measuring electromagnet coil inductance. If the valve is in the middle position, make it in a closed position through the method of supplementing energy for many times, and calibrate the temperature drift of the speed sensor (zero calibration and permanent magnet temperature influence calibration); then inspect the absolute corner of bent axle and define the working sequence and working phase of each cylinder;

Step 2: start the motor, inspect the corner of bent axle in time and confirm the opening moment of each cylinder according to the working sequence and working phase of each cylinder;

Step 3: open the valve. When the valve needs to be opened (advance corner needs to be considered), supply a reverse excitation current to the coil winding 6a of the upper electromagnet assembly 2 to make the magnetic field direction produced in the coil opposite to that of the permanent magnet and overcome the attraction force of the latter. When the attraction force of the permanent magnet is smaller than the spring force, compound rotor will open the valve driven by the valve spring 9.

Step 4: central control of valve movement. Continue to supply current through the coil on coil winding 6a of the upper electromagnet assembly 2 and produce downward actuation force with the armature 4 repulsion of the electromagnet and the electric power of the linear motor rotor to supplement system energy. The speed sensor measures the speed and calculates the displacement according to the current size, then increase or decrease the current according to the relationship of set speed and displacement. Meanwhile, when the energy supplemented is higher, the coil winding 6a of the lower electromagnet assembly 3 can also produce downward actuation force through current, especially in the opening process of valve, where due to the existence of high pressure gas which may impulse the valve upwardly, the simultaneous function of two coils can help to reduce current. In the process of movement, the distance between the armature and upper pickup surface becomes farther and farther while the distance to the lower pickup surface is nearer and nearer. The upper electromagnet assembly 2 is transformed from mainly working in an electromagnet state to mainly working in a linear motor state and the lower electromagnet assembly 3 is transformed from mainly working in a linear motor state to mainly working in an electromagnet state.

Step 5: pickup speed control of valve movement. When the armature 4 is near to the pickup surface 3a of the lower electromagnet assembly 3, reduce the current of the lower electromagnet assembly 3 in advance first to avoid relative large attraction force produced between the coil winding 6a of the lower electromagnet assembly 3 and the armature 4. If necessary, supply reverse current to the upper electromagnet assembly 2, but not limited to the upper electromagnet assembly 2. When the performance of the magnet core used is good enough, reverse current can also be supplied to the electromagnet assembly 3. When the armature 4 moves to the pickup position, speed of the whole system will be lowered to a properly low speed, the current in the upper and lower electromagnet assemblies 2, 3 shall be lowered to zero fast, the pickup surface of the lower electromagnet assembly 3 and the pickup surface of compound rotor will produce enough attraction force to make the attraction force in the pickup surface of compound rotor sufficient to overcome the spring force of the valve spring and make the valve kept in its open position. At this time, make dynamic calibration to the speed sensor. Valve closing process is similar to method above. When the motor stops, pick the valve up to its closed position, which is helpful for the next time of start.

The actuation system for the electromagnetic valve of this execution mode is a dual-valve electromagnetic actuation system.

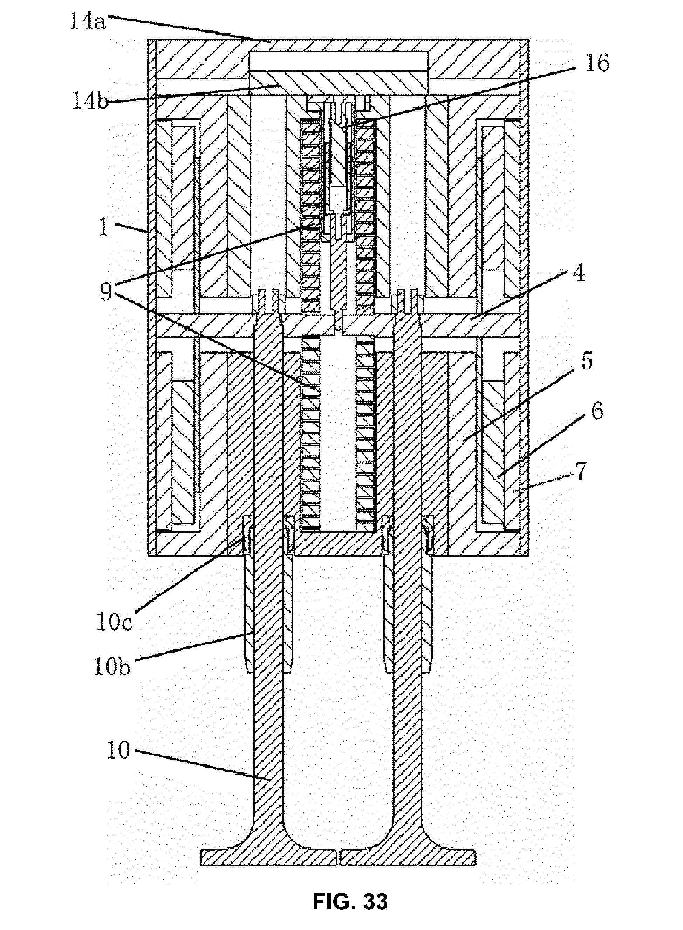

Specifically, as shown in FIGS. 32-33, the actuation system has two valve rods 10. The two valve rods 10 share one set of actuation compound rotor, upper and lower electromagnet assemblies 2 and 3 as well as actuation housing 1, gap adjusting mechanism 14 and speed sensor 16. Therefore, the cross section of the system is nearly oval.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. An actuation system for an electromagnetic valve, the actuation system comprising:
a) an actuation housing (1);
b) an upper electromagnet assembly (2) and a lower electromagnet assembly (3), both being installed inside the actuation housing (1) and the upper electromagnet assembly (2) being arranged above the lower electromagnet assembly (3), the upper electromagnet assembly (2) comprising a lower end surface which operates as an upper pickup surface (2a), and the lower electromagnet assembly (3) comprising an upper end surface which operates as a lower pickup surface (3a);
c) an armature (4), the armature (4) being disposed between the upper pickup surface (2a) and the lower pickup surface (3a) and capable of moving up and down;
d) a radial permanent magnet (8);
e) a valve spring (9); and
f) a valve rod (10);
wherein
each electromagnet assembly (2, 3) comprises an inner magnet core (5), a coil kit (6), and an outer magnet core (7), which are sleeved with each other from inside to outside;
the coil kit (6) comprises a coil winding (6a) and a magnetizer (6b), and the coil winding (6a) and the magnetizer (6b) wind the inner magnet core (5) by turns;
the radial permanent magnet (8) is disposed between the inner magnet core (5) and the outer magnet core (7);
the valve spring (9) is disposed at an inner side of the inner magnet core (5);
the valve rod (10) passes through a center formed by the valve spring (9) and is fixedly connected with the armature (4);
the armature (4) is interconnected with at least one radial permanent magnet (8) to form an actuation compound rotor, or, the armature (4) and the radial permanent magnet (8) are independent with each other; and
the valve rod (10) is capable of moving with the move of the armature (4) up and down.

2. The actuation system of claim 1, **characterized in that**
the coil winding (6) further comprises a cylindrical coil former (6c);
the cylindrical coil former (6c) sleeves the inner magnet core (5);
the coil winding (6a) and the magnetizer (6b) wind the cylindrical coil former (6c) by turns;
the cylindrical coil former (6c) comprises a coil cover (6d) on one end approaching to the armature (4) and a separate coil cover (6e) on the other end.

3. The actuation system of claim 1, **characterized in that**
the radial permanent magnet (8) is disposed between the inner magnet core (5) and the coil kit (6);
open ends of the inner magnet core (5) and the outer magnet core (7) comprise a first air gap (11) for increasing the magnetic resistance; and
the first air gap (11) is formed between an outer wall of the inner magnet core (5) and an inner wall of a joint liner ring (12a), and between an inner wall of the outer magnet core and an outer wall of the joint liner ring (12a), or the joint liner ring (12a) made of non-magnetic materials operates as an air gap.

4. The actuation system of claim 2, **characterized in that** the cylindrical coil former (6c) is made of high magnetic conduction, low resistance materials, and comprises discontinuous and staggered longitudinal seams.

5. The actuation system of claim 2, **characterized in that**
the coil winding (6a) comprises multiple layers of coils;
each layer of the coils winds the cylindrical coil former (6c) in a spiral way from the top down with spacing;
the layers of the coils are aligned with one another from inside to outside with coils of two adjacent layers connected end to end, and
the magnetizer (6b) is disposed in the space between the coils.

6. The actuation system of claim 2, **characterized in that**
the coil winding (6a) is made of strip conductors;
the magnetizer (6b) is a magnetic conduction strip disposed in spacing of the strip conductors;
the strip conductors wind the cylindrical coil former (6c) in a spiral way with spacing; and
the magnetic conduction strip also winds the cylindrical coil former (6c) in a spiral way.

7. The actuation system of claim 1, **characterized in that**
the armature (4) is connected with the radial permanent magnet (8) via a joint liner ring (12a) and a joint sleeve (12b);
the joint sleeve (12b) is in the form of a tubular construction and fixes the joint liner ring (12a) and the radial permanent magnet (8) together; and
one end of the joint liner ring (12a) is connected with the armature (4) and the other end is connected with the radial permanent magnet (8).

8. The actuation system of claim 7, **characterized in that** the radial permanent magnets (8) of both the upper and the lower electromagnet assemblies (2, 3) are connected with the armature (4) to form the actuation compound rotor, or, one of the radial permanent magnets (8) of the upper and lower electromagnet assemblies (2, 3) is connected to with the armature (4) to form the actuation compound rotor, and the other is fixed between the inner magnet core (5) and the outer magnet core (7).

9. The actuation system of claim 8, **characterized in that**
the actuation compound rotor is a combined-type compound rotor;
the combined-type compound rotor comprises an armature bracket (12c) comprising a plurality of radiation frames (12d) distributed uniformly;
the armature (4) is disposed between the radiation frames;
the armature bracket (12c) comprises a mounting hole (12e) in the center in which the valve rod (10) is fixedly disposed; and
the armature (4) is in the form of an overlapping fan comprising fan-shaped magnetic sheets.

10. The actuation system of claim 9, **characterized in that**
the combined-type compound rotor further comprises a locating ring (12f) clamping the armature (4);
one end of the joint liner ring (12a) is connected to the armature (4) via the locating ring (12f);
one end of the joint sleeve (12b) approaching to the locating ring is provided with a sleeve flange (12g);
the joint sleeve (12b) is disposed at the side of the joint liner ring (12a) and integrates the joint liner ring (12a) and the radial permanent magnet (8) into a whole; and
the sleeve flange (12g) is concentrically superposed on the locating ring (12f).

11. The actuation system of claim 8, **characterized in that** the actuation compound rotor is an integral type rotor, the radial permanent magnet (8) is embedded inside the joint sleeve (12b) and the joint sleeve is connected with the joint liner ring (12a).

12. The actuation system of claim 8, **characterized in that**
the actuation compound rotor is an integral-type compound rotor;
the radial permanent magnet (8) is connected with the armature (4) via the joint liner ring (12a); and
the connections between the radial permanent magnet (8) and the joint liner ring (12a), and between the joint liner ring (12a) and the armature (4) are in the form of toothed engagement.

13. The actuation system of claim 1, **characterized in that** a bottom of the inner magnet core (5) is provided with a connection member (5a), and a second air gap (13) for increasing the magnetic resistance is disposed between a bottom surface of the outer magnet core (7) and the connection member (5a).

14. The actuation system of claim 13, **characterized in that**
the inner magnet core (5) comprises a plurality of L-shaped magnetic groups (5b) and a cylindrical inner magnetic core frame (5c);
the magnetic groups (5b) comprise a plurality of fan-shaped magnetic sheets;
an outer wall of the cylindrical inner magnetic core frame (5c) is uniformly provided with a plurality of stiffeners (5d) that are distributed in an axial direction;
the magnetic groups (5b) are fixed between the stiffeners (5d) and tightly attached to the outer wall of the cylindrical inner magnetic core frame (5c); and
a locating step (5e) is disposed at an end surface of the cylindrical inner magnetic core frame (5c) of the lower electromagnet assembly (3).

15. The actuation system of claim 14, **characterized in that**
the outer magnet core (7) comprises a plurality of outer magnet core bodies (7a) comprising fan-shaped magnetic sheets and a cylindrical outer magnetic core frame (7b);
an inner wall of the cylindrical outer magnetic core frame (7b) is provided with a plurality of outer magnet core stiffeners (7c) protruding inwards;
one end surface of the cylindrical outer magnetic core frame (7b) is provided with a positioning flange (7d); and
the outer magnet core bodies (7a) are disposed between the outer magnet core stiffeners (7c) and fitted with the positioning flange (7d).

16. The actuation system of claim 1, **characterized in that**
a bottom of the inner magnet core (5) is provided with a connection member (5a), and the connection member (5a) is fixedly connected with a bottom surface of the outer magnet core (7);
the inner magnet core (5), outer magnet core (7), and connection member (5a) are made of integral iron cores; and
magnetic conductivities of the inner magnet core (5) and the outer magnet core (7) decrease in the direction from the pickup surfaces (2a, 3a) to the connection member (5a).

17. The actuation system of claim 1, further comprising a structure for reducing a diameter of the armature; **characterized in that** a joint liner ring (12a) is made of non-magnetic materials, a magnetic coil cover (6d) cooperates closely with the outer magnet core (7), an end surface of the magnetic coil cover (6d) is aligned with the inner magnet core (5), an end surface of the outer magnet core (7) is lower than the inner magnet core (5), and an outer diameter of the armature (4) is equal to that of the end surface of the magnetic coil cover (6d).

18. The actuation system of claim 1, further comprising a gap adjusting mechanism (14);
**characterized in that**
the gap adjusting mechanism (14) comprises a gap adjusting hydraulic cylinder;
the gap adjusting hydraulic cylinder comprises a gap adjusting cylinder body (14a) and a gap adjusting piston (14b) capable of sliding up and down on the gap adjusting cylinder body (14a);
the gap adjusting cylinder body (14a) is fixedly connected to the actuation housing (1); and
one end of the gap adjusting piston (14b) presses on an upper surface of the upper electromagnet assembly (2).

19. The actuation system of claim 1, further comprising a stoke adjusting mechanism (15); **characterized in that**
the stoke adjusting mechanism (15) comprises a stoke adjusting hydraulic cylinder;
the stoke adjusting hydraulic cylinder comprises a stoke adjusting cylinder body (15a) and a stoke adjusting piston (15b) capable of sliding up and down;
the stoke adjusting cylinder body (15a) is fixedly connected to the actuation housing (1);
one end of the stoke adjusting piston (15b) is against a lower surface of the lower electromagnet assembly (3); and
the stoke adjusting piston (15b) pushes the lower pickup surface (3a) of the lower electromagnet assembly (3) to float up and down.

20. The actuation system of claim 19, **characterized in that**
the stoke adjusting mechanism (15) comprises a priority outlet valve and a one-way inlet valve;
an inlet and an outlet of the stoke adjusting mechanism of the same kind of actuation systems are connected in parallel respectively and then connected to an electronically controllable hydraulic valve in series; and
based on periodical change of the pressure in the gap adjusting hydraulic cylinder in the process of opening and closing of the valve rod (10), the move up and down of the stoke adjusting piston (15b) is controlled.

21. The actuation system of claim 1, further comprising an inductive circuit device for measuring displacement; **characterized in that**
the circuit device comprises an inductor (17a) and an actuation power supply (17g);
the inductor (17a), actuation power supply (17g), and coil winding (6a) are connected in series;
an inductance detecting terminal (17b) is connected at both ends of the inductor (17a);
a differential capacitor (17d) and a differential resistor (17e) are connected in series, and then connected to both ends of the inductor (17a) in parallel; and
an inductance differential sampling terminal (17f) is connected to both ends of the differential resistor (17e).

22. The actuation system of claim 1, **characterized in that** a top of the valve rod (10) is provided with a speed sensor (16).

23. The actuation system of claim 22, **characterized in that**
the speed sensor (16) comprises a sensor shell (16a) and an annular rotor;
the annular rotor is capable of sliding and fitted to an upper part of the sensor shell (16a);
the annular rotor comprises an actuation rod (16b), radial magnet (16c), non-magnetic conduction ring (16d), and joint coat (16e);
the radial magnet (16c) and the non-magnetic conduction ring (16d) are connected end to end and fixed on an inner wall of the joint coat (16e);
the actuation rod (16b) is fixedly connected with the joint coat (16e); the joint coat (16e) is capable of sliding on an inner wall of the sensor shell (16a);
an upper part of the annular rotor is in the form of a tubular shape; a lower part of a sensor inner magnet core (16g) wound with a sensor coil (16f) is connected to the inside of the annular rotor;
an upper part of the sensor inner magnet core (16g) is fixedly disposed on the sensor shell (16a) concentrically; and
the actuation rod (16b) is fixedly connected with the valve rod (10).

24. The actuation system of claim 22, **characterized in that**
the speed sensor (16) comprises a sensor shell (16k) and a columnar rotor;
a bottom of the columnar rotor is capable of sliding and fitted to a bottom of the sensor shell (16k);
the columnar rotor comprises an actuation rod (16m) and a radial magnet (16n);
the radial magnet (16n) is fixed in the middle outside the actuation rod (16m); a sensor coil former (16o) wound with a sensor coil (16p) is disposed outside the columnar rotor;
the sensor coil former (16o) is fixed on an inner wall of the sensor shell (16k); an upper part of the actuation rod (16m) is capable of sliding and fitted to a hollow clamping screw (16q), and the hollow clamping screw (16q) is fixed in a reserved hole of the sensor shell (16k); and
the actuation rod (16m) is fixedly connected to the valve rod (10).

25. The actuation system of claim 22, **characterized in that**
the speed sensor (16) comprises a sensor shell (16r) and a linear motor rotor, and the linear motor rotor is capable of sliding and fitted to the sensor shell (16r);
the linear motor rotor comprises a non-magnetic conduction rod (16s), two axial magnet rings (16t) with opposite poles, one magnetic conduction ring (16u), an actuation rod (16v), and a guide rod (16w);
the magnetic conduction ring (16u) is sandwiched between the two axial magnet rings (16t) and fixed outside the non magnetic conduction rod (16s);
the guide rod (16w) and the actuation rod (16v) are fixed at two ends of the non-magnet conduction rod (16s), respectively;
a sensor coil former (16y) wound with a sensor coil (16x) is fixed on an inner wall of the sensor shell (16r) concentrically and connected to the outside of the linear motor rotor; and
the actuation rod (16v) is fixedly connected to the valve rod (10).
